# EUROPEAN PATENT APPLICATION

(11) **EP 2 484 888 A1**
(43) Date of publication of application: **08.08.2012**
(21) Application number: 10820328.2
(22) Date of filing: 10.09.2010
(51) Int. Cl.: F02M 21/06, F02M 21/02

(54) **PTC HEATER UNIT AND PRESSURE REDUCING VALVE FOR LPG FUEL**

(30) Priority: 30.09.2009 JP 2009227901
(71) Applicant: Keihin Corporation, Tokyo 163-0539 (JP)
(72) Inventor: HATAKEYAMA Takushi, Kakuda-shi Miyagi 981-1505 (JP); ONO Jun, Kakuda-shi Miyagi 981-1505 (JP)
(74) Representative: Trossin, Hans-Jürgen
(86) International application number: PCT/JP2010/065606
(87) International publication number: WO 2011/040208

(57) **Abstract**

Disclosed is a PTC heater unit wherein the gas passing through a gas channel for heating is heated by a PTC element. In the PTC heater unit, a gap channel (60) that constitutes at least a part of a gas channel for heating (59) is formed between the inner circumferential surface of a base cylinder part (42a) on the outer circumferential surface of which a PTC element (43) is provided and the outer circumferential surface of an insertion cylinder (61) that is inserted into the base cylinder part (42a). Consequently, a pressure reducing valve for LPG fuel, which is provided with a PTC heater unit that is capable of increasing the heating efficiency of a PTC element, is provided.

## Description

### TECHNICAL FIELD

The present invention relates to a PTC heater unit configured to heat gas flowing through an inside of a heating gas passage with multiple PTC elements and a pressure reducing valve for LPG fuel attached with such a PTC heater unit.

### BACKGROUND ART

The following technique is known from Patent Document 1. A PTC element is attached to an outer surface of a wall forming a primary pressure reduction chamber of a regulator for adjusting the pressure of an LPG fuel, and the LPG fuel in the primary pressure reduction chamber is heated by the PTC element. Moreover, the following technique is known from Patent Document 2. PTC elements are fixed to the outer periphery of the inner tube portion forming a gas passage, and the gas flowing through the inside of the gas passage is heated by the PTC elements.

### PRIOR ART DOCUMENT

### PATENT DOCUMENT

Patent Document 1: Japanese Patent Application Laid-open No. 06-129313
Patent Document 2: Japanese Patent Application Laid-open No. 62-218652

### SUMMARY OF INVENTION

### PROBLEMS TO BE SOLVED BY THE INVENTION

Incidentally, in the technique disclosed in Patent Document 1 described above, although gas flowing near an inner surface of the wall having the PTC element attached to the outer surface thereof can be heated, a main flow of the LPG fuel flowing through the inside of the primary pressure reduction chamber is at a position away from the inner surface of the wall, and the efficiency of heating the LPG fuel by the PTC element is low. Moreover, in the technique disclosed in Patent Document 2, among the gas flowing through the gas passage, a part flowing through a center portion of the gas passage is away from the inner surface of the inner tube portion, and less heat is transferred from the PTC elements to the gas flowing through the center portion. Thus, the efficiency of heating using the PTC elements as a whole is low.

The present invention is made in view of the circumstances described above, and an object of the present invention is to provide a PTC heater unit with an improved efficiency of heating using a PTC element and to provide a pressure reduction valve for LPG fuel configured in such a manner that such a PTC heater unit can be compactly attached thereto.

### MEANS FOR SOLVING THE PROBLEMS

In order to attain the above object, according to a first aspect of the present invention, there is provided a PTC heater unit configured to heat gas flowing through an inside of a heating gas passage with a PTC element, wherein a gap passage forming at least part of the heating gas passage is formed between an inner peripheral surface of a base tube portion and an outer peripheral surface of an insertion tube inserted in the base tube portion, the base tube portion having the PTC element disposed on an outer peripheral surface thereof.

Furthermore, according to a second aspect of the present invention, in addition to the configuration of the first aspect, a plurality of the PTC elements each having a flat-plate shape are arranged on the outer peripheral surface of the base tube portion in a polygonal shape in a view seen from a direction along an axis of the base tube portion.

According to a third aspect of the present invention, in addition to the configuration of the first or second aspect, a plurality of ribs are provided in a protruding manner with intervals in a peripheral direction on one of the inner peripheral surface of the base tube portion and the outer peripheral surface of the insertion tube, the ribs having respective tip ends thereof in contact with the other of the inner peripheral surface of the base tube portion and the outer peripheral surface of the insertion tube, and the gap passage is formed between each adjacent ones of the ribs.

According to a fourth aspect of the present invention, in addition to the configuration of the third aspect, the inner peripheral surface of the base tube portion and the outer peripheral surface of the insertion tube are each formed of a tapered shape with a diameter becoming smaller toward one side in an axial direction thereof, and the insertion tube is inserted from an end thereof on the one side in the axial direction into the base tube portion.

According to a fifth aspect of the present invention, in addition to any one of the configurations of the first to fourth aspects, the base tube portion is detachably and attachably connected to a passage formation member forming a passage continuous with the gap passage, and protruding portions provided in a protruding manner respectively on opposite ends of the insertion tube in the axial direction are in contact respectively with an inwardly-projecting flange portion and an end wall in such a way that a position of the insertion tube in the base tube portion in the axial direction is determined, the inwardly-projecting flange portion provided in the base tube portion to face one end of the insertion tube in the axial direction, the end wall formed in the passage formation member to face another end of the insertion tube in the axial direction.

According to a sixth aspect of the present invention, in addition to any one of the configurations of the first to fifth aspects, the insertion tube is formed in such a bottomed cylindrical shape that one end thereof in the axial direction is opened and another end thereof in the axial direction is closed, an entry conduit part integrally included in a conduit member attached coaxially to the base tube portion has an outer diameter smaller than an inner diameter of the insertion tube and is inserted in the insertion tube, and a filter is fitted and fixed to an inner end portion of the entry conduit part.

According to a seventh aspect of the present invention, in addition to the configuration of the sixth aspect, an outer peripheral portion of the filter made of a metal is press-fitted to an inner periphery of the inner end portion of the entry conduit part.

According to an eighth aspect of the present invention, the base tube portion of the PTC heater unit according to any one of the configurations of the first to seventh aspects is directly connected to a body incorporating a valve mechanism in such a way that a downstream side of the gap passage communicates with a high-pressure gas passage provided in the body.

Here, a body 17 of an embodiment corresponds to the passage formation member of the present invention; and a high-pressure gas passage 25 of the embodiment corresponds to the passage of the present invention.

### EFFECTS OF THE INVENTION

With the first aspect of the present invention, the gap passage forming at least part of the heating gas passage is formed between the inner peripheral surface of the base tube portion and the outer peripheral surface of the insertion tube inserted in the base tube portion, and the PTC element is disposed on the outer peripheral surface of the base tube portion. Thus, the inner peripheral surface of the base tube portion being an outer-side wall surface of the gap passage is used as a heat radiation surface, and all the gas flowing through the heating gas passage is caused to flow near the heat radiation surface. Hence, the heating efficiency of gas can be improved.

With the second aspect of the present invention, the multiple flat-plate-shaped PTC elements whose molding cost is low are arranged on the outer peripheral surface of the base tube portion in the polygonal shape in the view seen from the direction of the axis of the base tube portion. Thus, the multiple PTC elements which are low in cost can be arranged to cover the base tube portion, and the heating efficiency of the gas can be improved.

With the third aspect of the present invention, the tip ends of the respective multiple ribs provided in a protruding manner on one of the inner peripheral surface of the base tube portion and the outer peripheral surface of the insertion tube are in contact with the other of the inner peripheral surface of the base tube portion and the outer peripheral surface of the insertion tube. Thus, the position of the insertion tube with respect to the base tube portion in the radial direction can be easily determined in such a way that the gap passage is surely formed between the base tube portion and the insertion tube.

With the fourth aspect of the present invention, the inner peripheral surface of the base tube portion and the outer peripheral surface of the insertion tube are each formed to have a tapered shape, and the insertion tube is inserted into the base tube portion from the smaller diameter side. Thus, the insertion of the insertion tube into the base tube portion and the positioning of the insertion tube in the base tube portion are facilitated.

With the fifth aspect of the present invention, the base tube portion is detachably and attachably connected to the passage formation member forming the passage continuous with the gap passage, and the protruding portions provided respectively on opposite ends of the insertion tube in the axial direction in a protruding manner are in contact respectively with the inwardly-projecting flange portion provided in the base tube portion and the end wall formed in the passage formation member. Thus, the positioning of the insertion tube in the axial direction is facilitated.

With the sixth aspect of the present invention, the insertion tube is formed to have the cylindrical shape with a bottom, the entry conduit part of the conduit member attached coaxially to the base tube portion is inserted in the insertion tube, and the filter is fitted and fixed to the inner end portion of the entry conduit part. Thus, the filter filtering the gas to be led into the gap passage can be disposed without having the size of the PTC heater unit increased in a direction along the axes of the base tube portion and the insertion tube.

With the seventh aspect of the present invention, the outer peripheral portion of the filter made of a metal is press-fitted to the inner periphery of the inner end portion of the entry conduit part. Thus the filter can be fitted and fixed to the inner end portion of the entry conduit part with a simple configuration.

With the eighth aspect of the present invention, the PTC heater unit can be compactly attached to the pressure reducing valve for LPG fuel as follows. The base tube portion is directly connected to the body of the pressure reducing valve for LPG fuel in such a way that a downstream side of the gap passage communicates with the high-pressure gas passage.

### BRIEF DESCRIPTION OF DRAWINGS

[FIG. 1] FIG. 1 is a longitudinal cross-sectional view of a pressure reducing valve for G fuel. (First Embodiment)
[FIG. 2] FIG. 2 is a longitudinal cross-sectional view of the pressure reducing valve for LPG fuel which is taken along a cut surface different from FIG. 1. (First Embodiment)
[FIG. 3] FIG. 3 is a perspective view of the pressure reducing valve for LPG fuel. (First Embodiment)
[FIG. 4] FIG. 4 is an enlarged view of a portion indicated by an arrow 4 in FIG. 1. (First Embodiment)
[FIG. 5] FIG. 5 is a perspective view of a PTC heater unit. (First Embodiment)
[FIG. 6] FIG. 6 is a perspective view sequentially showing a process of attaching a PTC holding member and PTC elements to an inner case. (First Embodiment)
[FIG. 7] FIG. 7 is a view sequentially showing a process of attaching a current-carrying-portion-side assembly. (First Embodiment)
[FIG. 8] FIG. 8 is an enlarged view of a portion indicated by an arrow 8 in FIG. 1. (First Embodiment)
[FIG. 9] FIG. 9 is an enlarged sectional view take along a line 9-9 in FIG. 2. (First Embodiment)
[FIG. 10] FIG. 10 is a perspective view in a state where a gas passage cover member is removed from a body. (First Embodiment)
[FIG. 11] FIG. 11 is a perspective view in a state where a heating fluid passage cover member is removed from the body. (First Embodiment)
[FIG. 12] FIG. 12 is a perspective view schematically showing an arrangement and communication state of multiple communication chambers in a low-pressure gas passage. (First Embodiment)
[FIG. 13] FIG. 13 is a plan view schematically showing the arrangement and communication state of the multiple communication chambers in the low-pressure gas passage. (First Embodiment)

### MODE FOR CARRYING OUT THE INVENTION

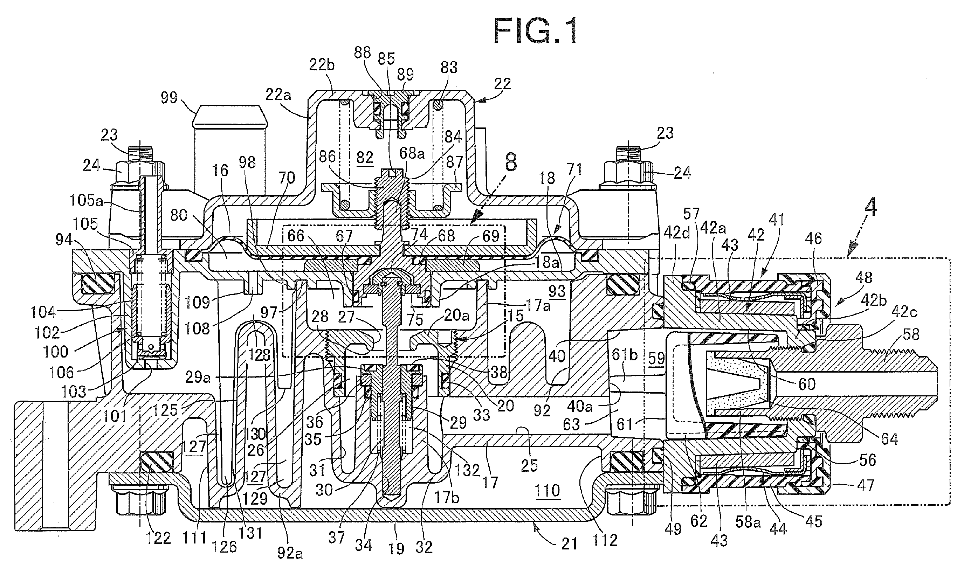

An embodiment of the present invention is described below with reference to FIGS. 1 to 13.

### FIRST EMBODIMENT

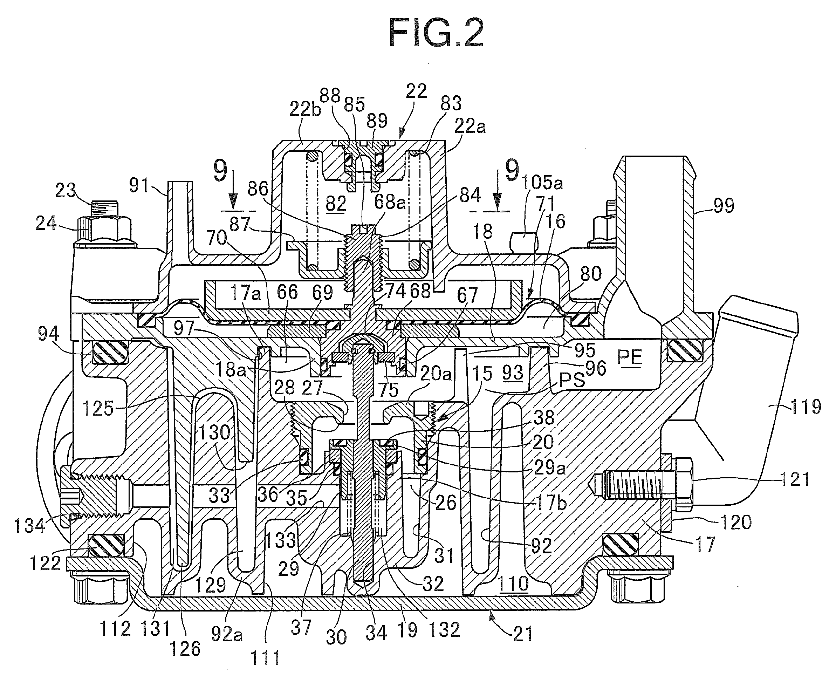

At first, referring to FIGS. 1 and 2, this pressure reducing valve for LPG fuel is one for reducing the pressure of LPG fuel and then supplying it to an engine (not illustrated). The pressure reducing valve includes a valve mechanism 15 and a diaphragm 16 for driving the valve mechanism 15 to open and close.

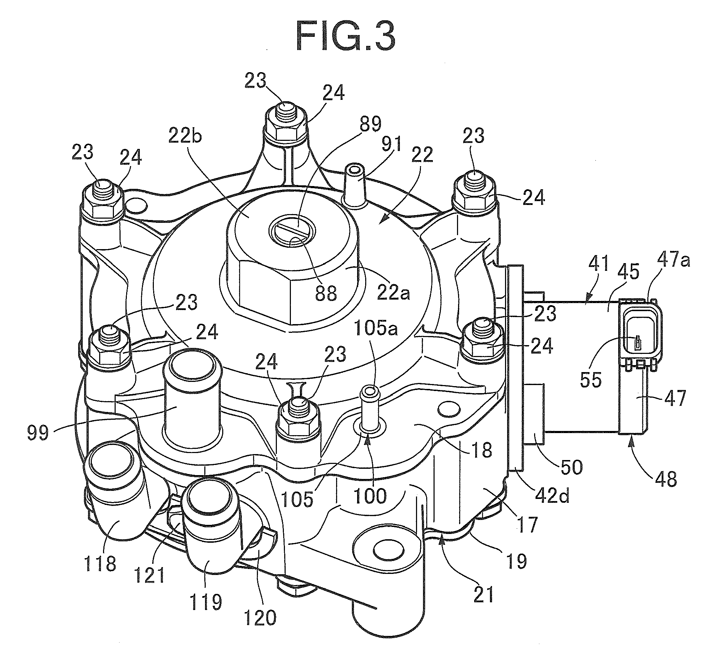

Referring also to FIG. 3, a valve housing 21 of the valve mechanism 15 is formed of a body 17, a gas passage cover member 18 fastened to one surface of the body 17, a heating fluid passage cover member 19 fastened to the other surface of the body 17, and a valve seat member 20 (see FIGS. 1 and 2) screwed to the body 17. A diaphragm cover 22 which holds a peripheral edge potion of the diaphragm 16 between the diaphragm cover 22 and the gas passage cover member 18 is fastened together with the body 17, the gas passage cover member 18, and the heating fluid passage cover member 19 by multiple bolts 23... and multiple nuts 24....

The valve mechanism 15 is housed in the body 17, and includes a valve body 29 and a valve stem 30. The valve body 29 faces a valve chamber 26 communicating with a high-pressure gas passage 25, and can seat on a valve seat 28 having a valve hole 27 opened in a center portion thereof. The valve stem 30 is connected to the diaphragm 16 operating in accordance with a gas pressure downstream of the valve seat 28, and is continuous with the valve body 29.

The body 17 is provided with a cylinder portion 17a disposed in a center portion of the body 17. The cylinder portion 17a is provided with a bottomed attachment hole 31. One end of the attachment hole 31 is opened to the one surface side of the body 17 and the other end is closed with an end wall 32. The attachment hole 31 has such a stepped shape that the diameter thereof becomes smaller stepwise toward the end wall 32.

The valve seat member 20 has a flange portion 20a in one end thereof, and has a cylindrical shape, the flange portion 20a projecting inward in a radial direction. The annular valve seat 28 having the valve hole 27 opened in the center portion thereof is formed in a center of the flange portion 20a. The valve seat member 20 is inserted and fixed to an intermediate portion of the attachment hole 31 in an axial direction by being screwed to the body 17, and an annular first sealing member 33 elastically in contact with an inner surface of the intermediate portion of the attachment hole 31 in the axial direction is attached to an outer periphery of the valve seat member 20.

A center cylinder portion 17b, which is disposed in a center portion in the cylinder portion 17a with one end thereof disposed at a position corresponding to an intermediate portion of the valve seat member 20 in the axial direction, has the other end thereof provided integrally with the end wall 32 closing the other end of the attachment hole 31. A guide hole 34 which has a bottom and which has a diameter smaller than an inner diameter of the center cylinder portion 17b is provided in the end wall 32 to be coaxially continuous with the center cylinder portion 17b.

The valve body 29 having a flange portion 29a at one end is slidably fitted to the center cylinder portion 17b, the flange portion 29a projecting outward in the radial direction. An annular second sealing member 35 in sliding contact with an outer periphery of the valve body 29 is attached to a portion of an inner surface of the center cylinder portion 17b which is close to the one end. An annular retainer 36 which prevents detachment of the second sealing member 35 from the center cylinder portion 17b is fitted and fixed to an open end of the center cylinder portion 17b. When the flange portion 29a comes into contact with the retainer 36, an end of movement of the valve body 29 in a direction away from the valve seat 28 is restricted.

Incidentally, the valve body 29 is driven in an axial direction by the diaphragm 16. In order to improve following capability of the valve body 29 to the operation of the diaphragm 16, a coil-shaped spring 37 is provided in a compressed state in the center cylinder portion 17b between the end wall 32 and the valve body 29, the spring 37 biasing the valve body 29 in such a direction that the flange portion 29a approaches the valve seat 28. A set load of the spring 37 is set to an extremely small value which is enough to cause the valve body 29 to follow the diaphragm 16. Moreover, an annular third sealing member 38 capable of seating on the valve seat 28 is attached to the flange portion 29a.

An intermediate portion of the valve stem 30 coaxially penetrating the valve body 29 is joined to the valve body 29. One end side of the valve stem 30 loosely penetrates the valve hole 27 and is connected to the diaphragm 16, and the other end portion of the valve stem 30 is slidably fitted to the guide hole 34.

The valve chamber 26 is formed around the center cylinder portion 17b between the end wall 32 and the valve seat member 20 hermetically inserted and fixed to the intermediate portion of the cylinder portion 17a. Meanwhile, the body 17 is provided with an inlet-side connection hole 40 opened in a side surface of the body 17 and the high-pressure gas passage 25 having one end opened to an inner end of the inlet-side connection hole 40 and the other end communicating with the valve chamber 26.

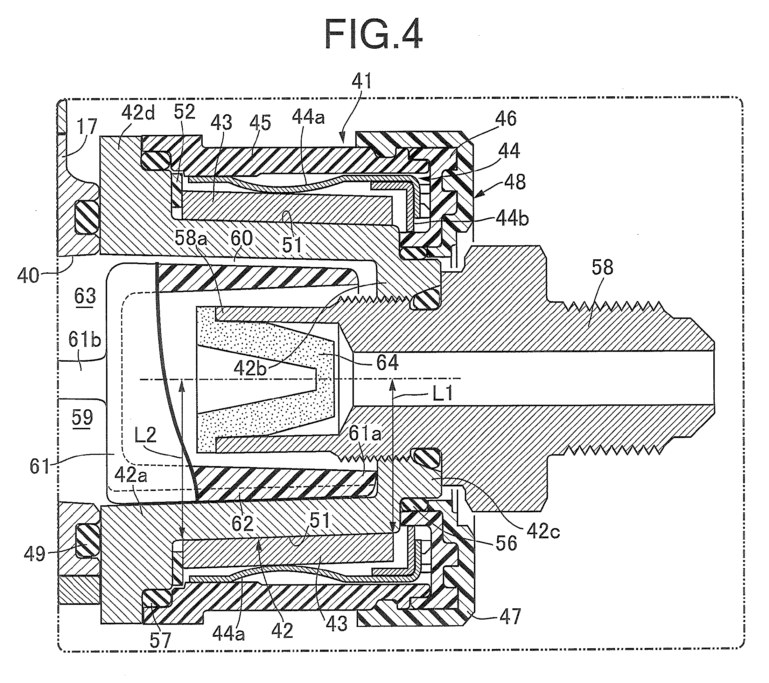

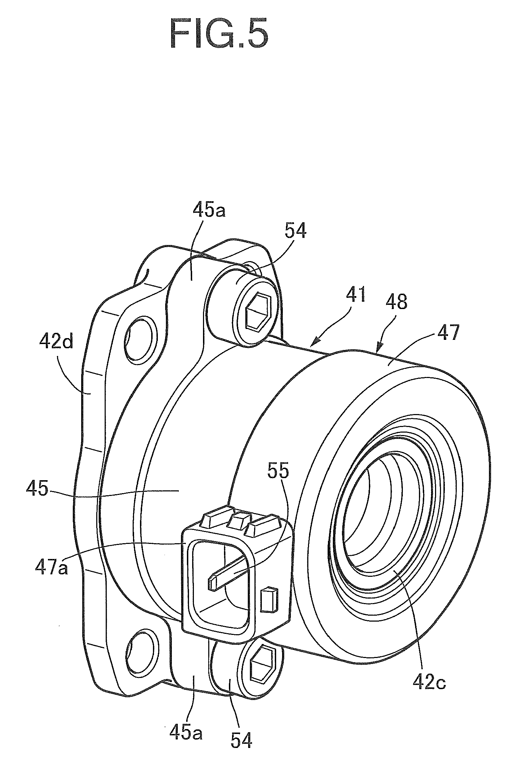

Referring also to FIGS. 4 and 5, a PTC heater unit 41 is attached to the side surface of the body 17 at a position corresponding to the inlet-side connection hole 40.

The PTC heater unit 41 is formed of a metal inner case 42 fastened to the side surface of the body 17, multiple, for example six PTC elements 43, 43... disposed on an outer periphery of the inner case 42, and a current-carrying-portion-side assembly 48. The current-carrying-portion-side assembly 48 includes a current-carrying member 44 and a tubular outer case 45, and covers the inner case 42 with the PTC elements 43, 43... interposed between the current-carrying-portion-side assembly 48 and the inner case 42.

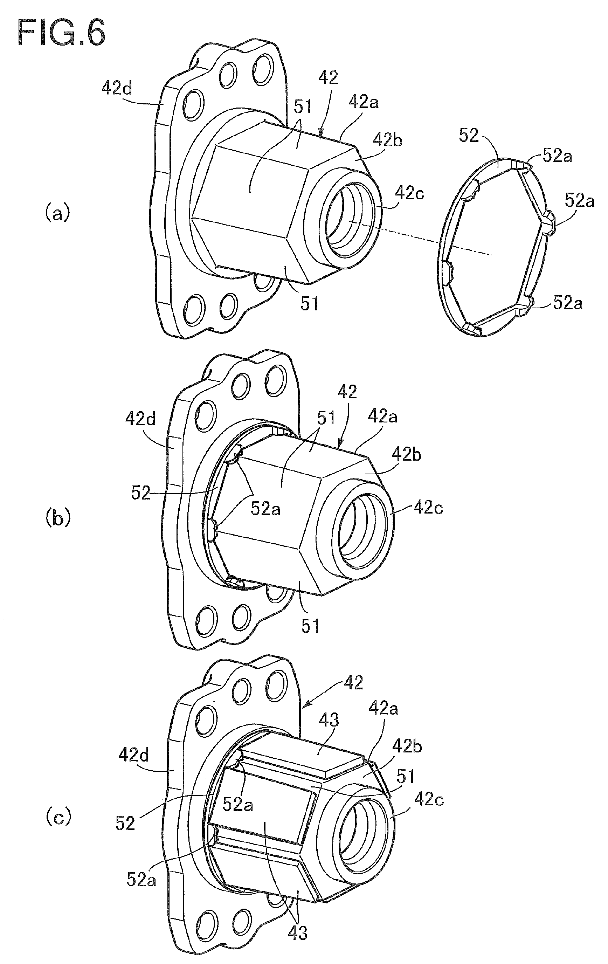

Referring also to FIG. 6, the inner case 42 integrally has a base tube portion 42a, an inwardly-projecting flange portion 42b, a connection tube portion 42c, and a flange portion 42d. The base tube portion 42a has an inner peripheral surface continuous and flush with an inner periphery of the inlet-side connection hole 40 of the body 17 The inwardly-projecting flange portion 42b projects inward from one end of the base tube portion 42a in a radial direction. The connection tube portion 42c is continuous with an inner periphery of the inwardly-projecting flange portion 42b, and protrudes outward in an axial direction. The flange portion 42d projects outward from the other end of the base tube portion 42a in the radial direction. The flange portion 42d is fastened to the body 17 by multiple bolts 50... with an annular fourth sealing member 49 interposed between the flange portion 42d and the side surface of the body 17. The base tube portion 42a is directly connected to the body 17 to be attachable and detachable.

An outer peripheral surface of the base tube portion 42a is formed to have a polygonal shape, for example a hexagonal shape having multiple, for example six flat supporting surfaces 51, 51... which are respectively in contact with and support the flat-plate shaped PTC elements 43, 43.... The multiple PTC elements 43, 43... are arranged on the outer peripheral surface of the base tube portion 42a in a polygonal shape in a view seen from a direction along an axis of the base tube portion 42a.

Each of the supporting surfaces 51, 51... is formed as an inclined surface inclined in such a way that the surface becomes closer to the center of the base tube portion 42a toward the one end of the base tube portion 42a in the axial direction. Specifically, as shown in FIG. 4, a distance L1 from the supporting surface 51 to the center axis of the base tube portion 42a on the one end side of the base tube portion 42a in the axial direction is set to be smaller than a distance L2 from the supporting surface 51 to the center axis of the base tube portion 42a on the other end side of the base tube portion 42a in the axial direction (L1<L2).

As shown in FIGS. 6(a), 6(b), 6(c), an annular PTC holding member 52 made of a synthetic resin is brought into contact with the flange portion 42d from the one end side of the base tube portion 42a in the axial direction. End portions, on a side close to the flange portion 42d, of the respective PTC elements 43, 43... are brought into contact with the PTC holding member 52 as shown in FIG. 6(c), the PTC elements 43, 43... disposed respectively on the supporting surfaces 51, 51... in the outer peripheral surface of the base tube portion 42a.

Moreover, a portion of the outer peripheral surface of the base tube portion 42a where the PTC elements 43, 43... are disposed and an inner periphery of the PTC holding member 52 respectively have polygonal shapes, for example, hexagonal shapes corresponding to each other. Multiple protruding portions 52a, 52a... are provided in a protruding manner in the PTC holding member 52, disposed at positions corresponding to corner portions of the polygonal shape, respectively, and protruding to a side opposite to the flange portion 42d. Each of the protruding portions 52a, 52a... is disposed between corresponding adjacent two of the multiple PTC elements 43, 43... disposed on the outer peripheral surface of the base tube portion 42a.

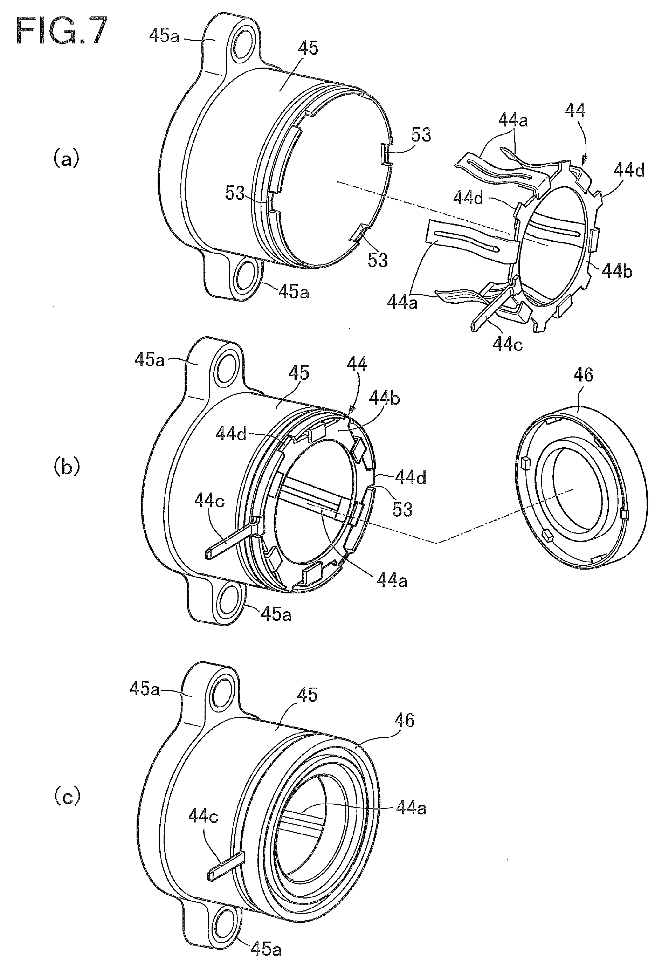

As shown in FIG. 7 (a), the current-carrying member 44 is formed of multiple electrode portions 44a, 44a..., an annular convergence portion 44b, and a terminal portion 44c. The electrode portions 44a, 44a... are individually and elastically in contact with the multiple PTC elements 43, 43... disposed on the outer peripheral surface of the base tube portion 42a. The convergence portion 44b commonly connects the electrode portions 44a, 44a... together. The terminal portion 44c has one end thereof connected to the convergence portion 44b. Positioning protruding portions 44d, 44d... protruding outward are provided in the convergence portion 44b in a protruding manner respectively at center portions between adjacent ones of the electrode portions 44a, 44a....

The outer case 45 made of a synthetic resin is formed to have such a tubular shape that the multiple electrode portions 44a, 44a... are held by the inner peripheral surface of the outer case 45. Multiple positioning cutouts 53, 53... are provided in one end of the outer case 45. The positioning protruding portions 44d, 44d... are fitted respectively to the positioning cutouts 53, 53... to determine the position of the current-carrying member 44 in the peripheral direction. A pair of attachment protruding portions 45a, 45a projecting laterally from two positions in the other end of the outer case 45 with equal intervals in the peripheral direction are attached to the flange portion 42d of the inner case 42 respectively by bolts 54, 54.

Incidentally, the one end side of the outer case 45 is covered with a mold portion 47 made of a synthetic resin with the current-carrying member 44 arranged in the following way. The convergence portion 44b commonly continuous with the multiple electrode portions 44a, 44a... disposed inside the outer case 45 is disposed on the one end side of the outer case 45 in the axial direction, and part of the terminal portion 44c is positioned outside the outer case 45. Thus, the current-carrying-portion-side assembly 48 including at least the current-carrying member 44, the outer case 45, and a mold portion 47 is configured.

As shown in (b) and (c) of FIG. 7, a current-carrying member holding ring 46 with the convergence portion 44b of the current-carrying member 44 interposed between the current-carrying member holding ring 46 and the one end of the outer case 45 is fitted to one end portion of the outer case 45 in the axial direction. The mold portion 47 is formed to cover the current-carrying member holding ring 46. In other words, the current-carrying-portion-side assembly 48 is formed of the current-carrying member 44, the outer case 45, the current-carrying member holding ring 46, and the mold portion 47. Moreover, a connector portion 47a for disposing part of the terminal portion 44c as a connector terminal 55 is formed integrally with the mold portion 47.

The base tube portion 42a of the inner case 42 which have the PTC elements 43, 43... disposed on the outer peripheral surface thereof is fitted to the current-carrying-portion-side assembly 48 from the one end side of the base tube portion 42a in the axial direction. An annular fifth sealing member 56 is interposed between an outer peripheral portion of the inner case 42 at one end thereof and one end of the current-carrying-portion-side assembly 48, and an annular sixth sealing member 57 is interposed between an outer peripheral portion the inner case 42 at the other end thereof and the other end of the current-carrying-portion-side assembly 48.

A conduit member 58 for introducing LPG fuel is hermetically attached to a connection case in one end of the inner case 42 to be coaxial with the base tube portion 42a, for example, by being screwed therein. Gap passages 60... forming at least part of a heated gas passage 59 connecting the conduit member 58 and the high-pressure gas passage 25 are formed between an inner peripheral surface of the base tube portion 42a and an outer peripheral surface of an insertion tube 61 inserted into the base tube portion 42a.

The insertion tube 61 is formed to have a bottomed cylindrical shape which has one end opened and the other end closed. The insertion tube 61 is inserted in the base tube portion 42a with a side opposite to the body 17 opened. Protruding portions 61a..., 61b for determining the position of the insertion tube 61 in the base tube portion 42a in the axial direction are provided in opposite ends of the insertion tube 61 in a protruding manner. The protruding portions 61a... are provided respectively at multiple positions in one end of the insertion tube 61 in a protruding manner to be in contact with the inwardly-projecting flange portion 42b of the inner case 42. Meanwhile, the protruding portion 61b is provided in the other end of the insertion tube 61 in a protruding manner to be in contact with an end wall 40a formed in the body 17 to form the inner end of the inlet-side connection hole 40.

Furthermore, multiple ribs 62... are formed in a protruding manner in one of the inner peripheral surface of the base tube portion 42a and the outer peripheral surface of the insertion tube 61, the outer peripheral surface of the insertion tube 61 in this embodiment, with intervals in a peripheral direction, the ribs 62... having tip ends thereof in contact with the other one of the inner peripheral surface of the base tube portion 42a and the outer peripheral surface of the inner tube, the inner peripheral surface of the base tube portion 42a in this embodiment. A corresponding one of the gap passages 60... is formed between each two adjacent ribs 62....

The inner peripheral surface of the base tube portion 42a and the outer peripheral surface of the insertion tube 61 are each formed to have such a tapered shape that the diameter thereof becomes smaller toward the one side thereof in the axial direction. The insertion tube 61 is inserted into the base tube portion 42a from the one end side of the insertion tube 61 in the axial direction.

A passage portion 63 communicating with the high-pressure gas passage 25 of the body 17 is formed between the body 17 and the insertion tube 61 to be part of the heated gas passage 59, and the gap passages 60... communicate with the high-pressure gas passage 25 via the passage portion 63.

Incidentally, the conduit member 58 integrally includes an entry conduit part 58a which has a diameter smaller than the inner diameter of the insertion tube 61 and which is coaxially inserted into the insertion tube 61. A metal filter 64 is fitted and fixed to an inner end portion of the entry conduit part 58a, for example, in such a way that an outer peripheral portion of the filter 64 is pressed into an inner periphery of the inner end portion of the entry conduit part 58a.

Returning to FIGS. 1 and 2, the gas passage cover member 18 is fastened to an outer peripheral portion of the body 17 in a way that one end portion of the cylinder portion 17a of the body 17 is fitted to the gas passage cover member 18. A pressure reducing chamber 66 communicating with the valve hole 27 is formed in the cylinder portion 17a, between the body 17 and the gas passage cover member 18. Moreover, a guide tube portion 18a which extends toward the pressure reducing chamber 66 and which is coaxial with the valve hole 27 is provided integrally with a center portion of the gas passage cover member 18.

A diaphragm rod 68 jointed to a center portion of the diaphragm 16 is slidably fitted to the guide tube portion 18a. An annular seventh sealing member 67 in slide-contact with an inner periphery of the guide tube portion 18a is attached to an outer periphery of the diaphragm rod 68. One end of the valve stem 30 is connected to the diaphragm rod 68.

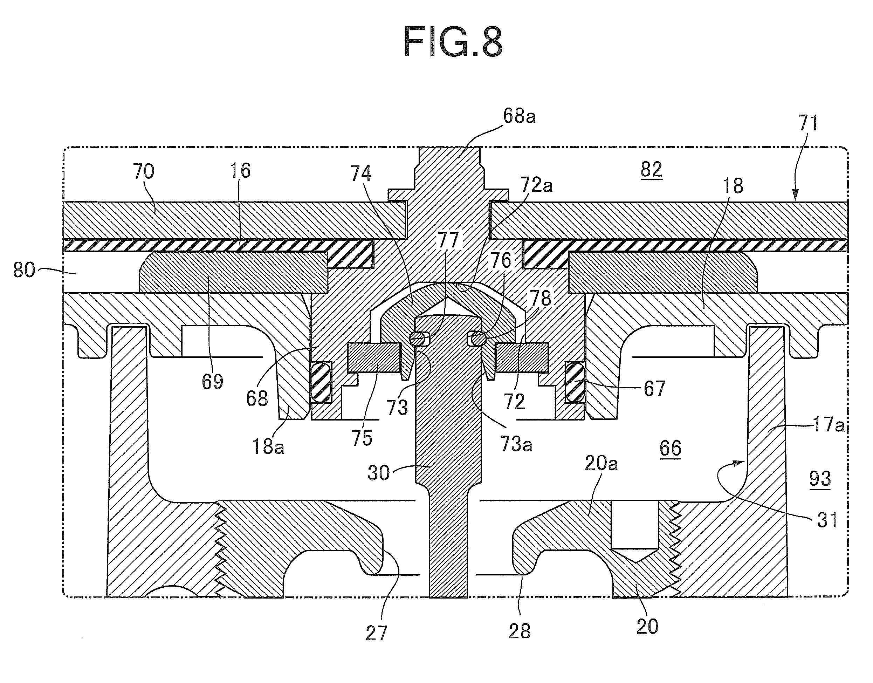

Referring also to FIG. 8, the diaphragm rod 68 has a first retainer 69 being separate from the diaphragm rod 68 interposed between the diaphragm rod 68 and a center portion of one surface of the diaphragm 16. A shaft portion 68a coaxially provided in the diaphragm rod 68 penetrates the diaphragm 16 and a second retainer 70 in contact with a center portion of the other surface of the diaphragm 16, and the shaft portion 68a is crimped to cause the shaft portion 68a to engage with the second retainer 70. Thus, the diaphragm rod 68 is joined to the center portion of the diaphragm 16 with the first and second retainers 69, 70 interposed between the diaphragm rod 68 and the center portion of the diaphragm 16. As a result, a diaphragm assembly 71 including at least the diaphragm 16, the first retainer 69, the second retainer 70, and the diaphragm rod 68 is assembled in advance before the valve stem 30 is connected to the diaphragm rod 68.

An insertion recess portion 72 having an end wall 72a facing the valve mechanism 15 side at a closed end is coaxially provided in the diaphragm rod 68 to be opened to the valve mechanism 15, and a conical-hat member 74 is loosely fitted to the insertion recess portion 72, the conical-hat member 74 having an outer periphery with a diameter larger than that of one end portion of the valve stem 30 and having a connection recess portion 73 which has a bottom and which is opened to the valve mechanism 15. Moreover, an annular holding plate 75 formed continuously with no end to have a ring shape is fixed to an inner periphery of an open end of the insertion recess portion 72 by being crimped or being press-fitted (being crimped, in this embodiment). Thus, the conical-hat member 74 is held between the holding plate 75 and the end wall 72a of the insertion recess portion 72.

Moreover, annular engaging grooves 76, 77 corresponding to each other are provided respectively in an outer periphery of the one end portion of the valve stem 30 fitted to the connection recess portion 73 and in an inner periphery of the connection recess portion 73. An engaging ring 78 expandable and contractable in a radial direction of the valve stem 30 engages with both of the engaging grooves 76, 77.

When the valve stem 30 is connected to the diaphragm rod 68, the valve stem 30 is connected to the diaphragm rod 68 of the diaphragm assembly 71 assembled in advance. In this case, the conical-hat member 74 is inserted into the insertion recess portion 72 of the diaphragm rod 68, fixed therein with the holding plate 75, and then the valve stem 30 is connected to the conical-hat member 74 by using the engaging ring 78. Moreover, in an open end of the connection recess portion 73, a guide surface 73a used in the fitting of the end portion of the valve stem 30 is formed as a tapered surface whose diameter becomes smaller toward the inside.

Incidentally, a pressure acting chamber 80 is formed between the gas passage cover member 18 and the one surface of the diaphragm 16, and a spring chamber 82 is formed between the other surface of the diaphragm 16 and the diaphragm cover 22. The diaphragm 16 is biased by a coil-shaped diaphragm spring 83 in such a direction that the capacity of the pressure acting chamber 80 is reduced. Note that, the spring load of the diaphragm spring 83 is adjustable.

An adjustment screw 86 is fitted to and supported by the shaft portion 68a to be rotatable about an axis in the spring chamber 82, the shaft portion 68a included in the diaphragm rod 68 which is linked to the valve body 29 via the valve stem 30 and which is joined to the center portion of the diaphragm 16. The adjustment screw 86 has a male screw 84 engraved on an outer peripheral surface and is provided with an engaging recess portion 85 in an end surface on a side opposite to the diaphragm rod 68. The male screw 84 in the outer periphery of the adjustment screw 86 is screwed to an inner periphery of a spring receiving member 87 which engages with an inner periphery of the diaphragm cover 22 to be incapable of rotating about an axis coaxial to the rotating axis of the adjustment screw 86 and which is housed in the spring chamber 82 to be moveable in the axial direction.

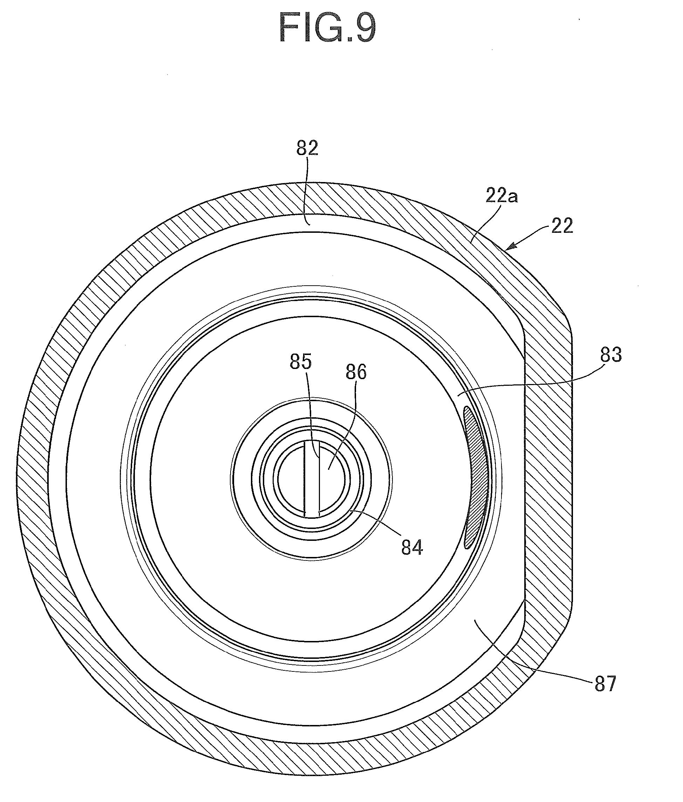

The diaphragm cover 22 has a tube portion 22a having a cross-sectional shape which is non-circular as shown FIG. 9, and is formed to have a hat shape having one end closed with an end wall 22b. The spring receiving member 87 engages with the inner periphery of the tube portion 22a to be capable of moving in a direction along the axis of the tube portion 22a but to be incapable of rotating about the axis.

The diaphragm spring 83 being a coil spring is provided in a compressed state between the spring receiving member 87 and the end wall 22b of the diaphragm cover 22. A tool insertion hole 88 is provided in the end wall 22b of the diaphragm cover 22 at a position facing the end surface of the adjustment screw 86 in which the engaging recess portion 85 is provided. A cap 89 closing the tool insertion hole 88 is attached to the end wall 22b of the diaphragm cover 22.

A vacuum introduction pipe 91 communicating with the spring chamber 82 is provided in the diaphragm cover 22, and a pipe passage (not illustrated) for introducing an intake manifold vacuum of the engine is connected to the vacuum introduction pipe 91.

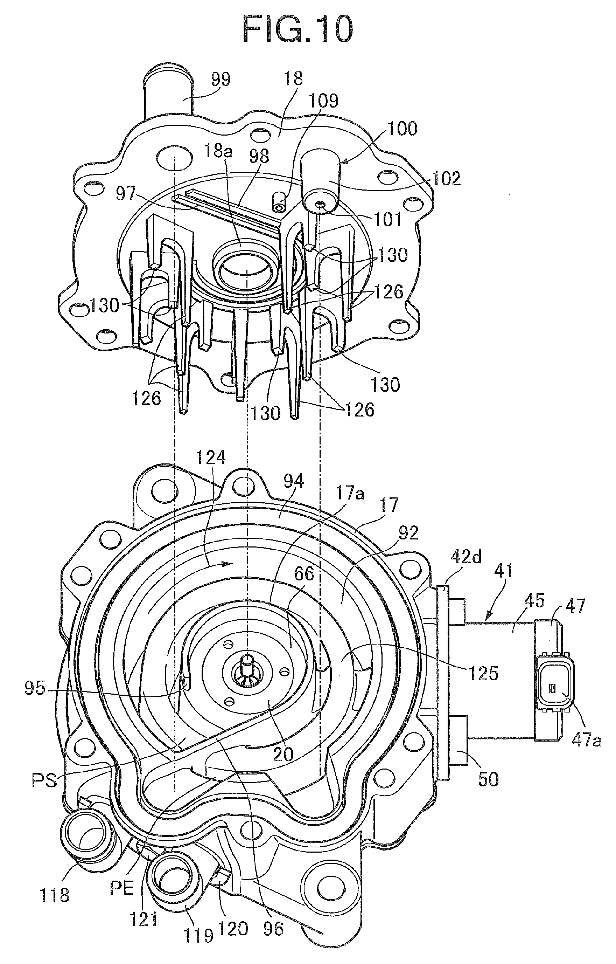

Referring also to FIG. 10, a circular gas passage groove 92 surrounding the cylinder portion 17a provided integrally with the body 17 is provided in the body 17 to be opened to the one surface of the body 17. A low-pressure gas passage 93 is formed by the gas passage groove 92 and the gas passage cover member 18 attached to the one surface of the body 17 to cover the gas passage groove 92. An annular eighth sealing member 94 is interposed between the body 17 and the gas passage cover member 18 in a portion outside the low-pressure gas passage 93.

Moreover, an opening portion 95 allowing the pressure reducing chamber 66 formed in the cylinder portion 17a to communicate with the low-pressure gas passage 93 is provided in one portion of the cylinder portion 17a in the peripheral direction in such a way that part of the cylinder portion 17a is cut off. An extending wall portion 96 extending in a tangent line direction with one end portion thereof continuous with the cylinder portion 17a on one side of the opening portion 95 is provided integrally with the body 17 in such a way that the other end portion of the extending wall portion 96 is connected to the outer peripheral portion of the body 17. Meanwhile, a protruding portion 98 forming a fitting groove 97 to which the one end of the cylinder portion 17a and the one end of the extending wall portion 96 are fitted is provided in the gas passage cover member 18 in a protruding manner to have a shape corresponding to the shape of the cylinder portion 17a and the extending wall portion 96 continuous with each other.

The LPG fuel flowing out from the pressure reducing chamber 66 to the low-pressure gas passage 93 flows through the inside of the low-pressure gas passage 93 to almost circle round the cylinder portion 17a. A start point PS of the low pressure gas passage 93 is set at a position on one side of the extending wall portion 96 which is a side where the opening portion 95 is disposed, and an end point PE of the low-pressure gas passage 93 is set at a position on the other side of the extending wall portion 96.

Moreover, a gas outlet pipe 99 leading to the end point PE of the low-pressure gas passage 93 is provided in the gas passage cover member 18. In addition, a relief valve 100 protruding into the low-pressure gas passage 93 near the end point PE is provided in the gas passage cover member 18. The relief valve 100 is formed of a valve housing 102, a valve body 104, a lid member 105, and a spring 106. The valve housing 102 is provided integrally with the gas passage cover member 18 to have a valve hole 101 leading to the inside of the low-pressure gas passage 93 in an end closed portion of the valve housing 102, to have a cylindrical shape with a bottom, and to protrude into the low-pressure gas passage 93. The valve body 104 has a sealing portion 103 capable of closing the valve hole 101 at a tip end thereof, and is slidably fitted to the valve housing 102. The lid member 105 has a connection pipe portion 105a in conformity, and is fitted and fixed to an open end of the valve housing 102 by press-fitting or the like. The spring 106 is provided in a compressed state between the lid member 105 and the valve body 104. The valve body 104 is formed to allow the LPG fuel discharged from the valve hole 101 to flow toward the connection pipe portion 105a in a state where the valve hole 101 is opened.

A tube portion 109 is provided integrally with the gas passage cover member 18 to lead to a portion of the low-pressure gas passage 93 near the end point PE, the tube portion 109 protruding into the low-pressure gas passage 93 to form a communication passage 108 for causing the pressure inside the low-pressure gas passage 93 to act on the pressure acting chamber 80 to which the one surface of the diaphragm 16 faces.

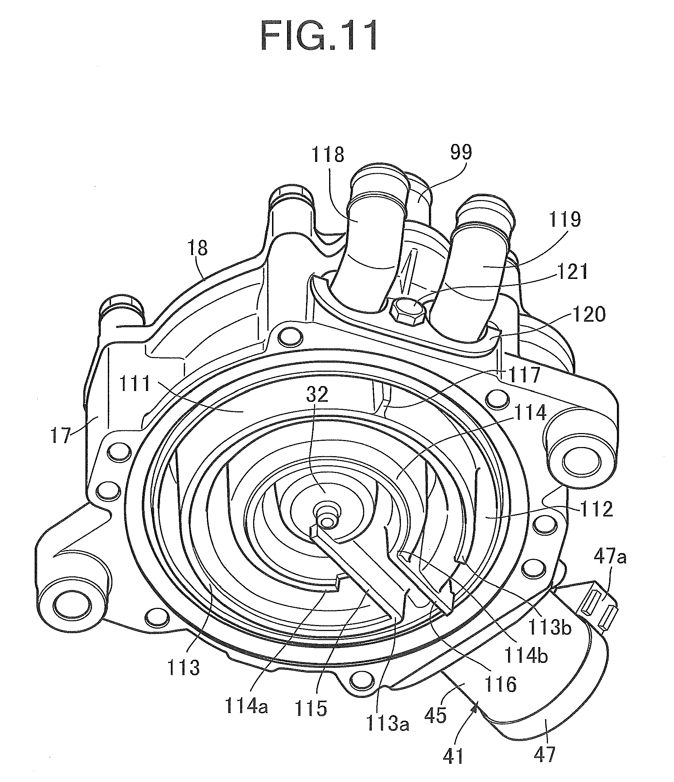

Referring also to FIG. 11, a heating fluid passage 110 through which engine cooling water to be a heat source outside the low-pressure gas passage 93 flows is formed in the valve housing 21. A heating fluid passage groove 111 is provided in the other surface of the body 17 which is on the side opposite to the low-pressure gas passage 93. The heating fluid passage groove 111 and a heating fluid passage cover member 19 covering the heating fluid passage groove 111 and attached to the other surface of the body 17 form the heating fluid passage 110.

A recess portion 112 having a diameter larger than that of the gas passage groove 92 is provided on the other surface side of the body 17. An outer arc wall 113 and an inner arc wall 114 are provided integrally in the body 17. The outer arc wall 113 is formed to have an arc shape and is disposed in the recess portion 112 at a position substantially corresponding to an outer periphery of the gas passage groove 92. The inner arc wall 114 is formed to have an arc shape and is disposed in the recess portion 112 at a position substantially corresponding to an inner periphery of the gas passage groove 92. One end 114a of the inner arc wall 114 is disposed at a position displaced from one end 113a of the outer arc wall 113 to one side in the peripheral direction, and the other end 114b of the inner arc wall 114 is disposed at a position displaced from the other end 113b of the outer arc wall 113 to the one side in the peripheral direction.

Moreover, an outer end of a first radial direction wall 115 is provided continuously and orthogonally to the one end 113a of the outer arc wall 113, the first radial direction wall 115 extending in the radial direction of the recess portion 112 to be disposed on the other side of the one end 114a of the inner arc wall 114 in the peripheral direction. An inner end of the first radial direction wall 115 is provided continuously with the end wall 32 closing the other end of the attachment hole 31. Moreover, an inner end of a second radial direction wall 116 is provided continuously and orthogonally to the other end 114b of the inner arc wall 114, the second radial direction wall 116 extending in parallel with the first radial direction wall 115 to be disposed on the one side of the other end 113b of the outer arc wall 113 in the peripheral direction. An outer end of the second radial direction wall 116 is provided continuously and orthogonally to the body 17 at the outer periphery of the recess portion 112. Furthermore, a separation wall 117 orthogonally connecting an intermediate portion of an outer periphery of the outer arc wall 113 and an outer periphery of the recess portion 112 is provided in the body 17.

The heating fluid passage groove 111 is formed by the recess portion 112, the outer arc wall 113, the inner arc wall 114, the first radial direction wall 115, the second radial direction wall 116, and the separation wall 117. The heating fluid passage 110 formed between the heating fluid passage groove 111 and the heating fluid passage cover member 19 includes a passage portion which causes the engine cooling water flowing into the heating fluid passage 110 on one side of the separation wall 117 to flow along the outer periphery of the outer arc wall 113 to the second radial direction wall 116, a passage portion which guides the engine cooling water with the first and second radial direction walls 115, 116 to cause the engine cooling water to flow to the inside of the inner arc wall 114, a passage portion which causes the engine cooling water to flow between the inner arc wall 114 and the outer arc wall 113 to the second radial direction wall 116, and a passage portion which causes the engine cooling water to flow along the outer periphery of the outer arc wall 113 to the other side of the separation wall 117.

A cooling water inlet pipe 118 and a cooling water outlet pipe 119 are fitted to a side portion of the body 17 in a liquid tight manner, the cooling water inlet pipe 118 leading to a portion of the heating fluid passage 110 on the one side of the separation wall 117 to introduce the engine cooling water into the heating fluid passage 110, the cooling water outlet pipe 119 leading to a portion the heating fluid passage 110 on the other side of the separation wall 117 to drain the engine cooling water out from the heating fluid passage 110. A fitting-state maintaining plate 120 which commonly maintains fitting states of the cooling water inlet pipe 118 and the cooling water outlet pipe 119 to the body 17 is fastened to the body 17 by using a bolt 121. An annular ninth sealing member 122 is interposed between the body 17 and the heating fluid passage cover member 19, outside the heating fluid passage 110.

A single passage-longitudinal-direction protruding wall 125 and multiple passage-width-direction protruding walls 126... are provided in the valve housing 21 of the pressure reducing valve to protrude into the low-pressure gas passage 93, the passage-longitudinal-direction protruding wall 125 extending in an arc shape along a normal flow direction 124 of the LPG fuel from the start point PS to the end point PE of the low-pressure gas passage 93, each of the passage-width-direction protruding walls 126... being orthogonal to the normal flow direction 124 and extending in a width direction of the low-pressure gas passage 93.

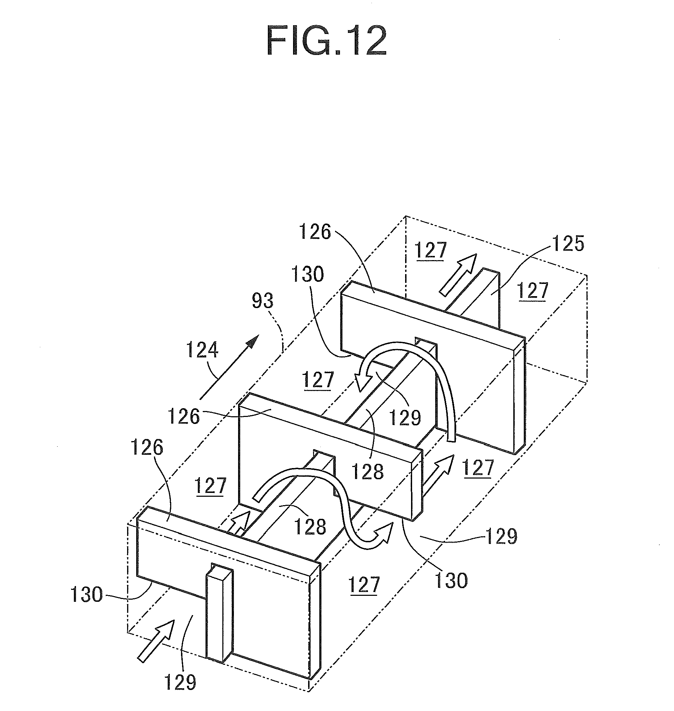

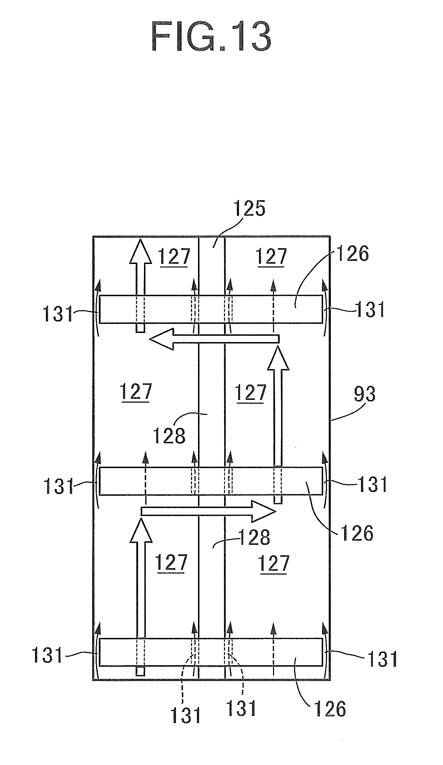

Referring also to FIGS. 12 and 13, multiple passage chambers 127... and multiple first and second communication passages 128..., 129... communicatively connecting adjacent ones of the passage chambers 127... to each other in such a way that the LPG fuel sequentially flows through the passage chambers 127... are formed in the low-pressure gas passage 93 by the cooperation of the body 17 and the gas passage cover member 18 of the valve housing 21 and the passage-longitudinal-direction protruding wall 125 and the passage-width-direction protruding walls 126.... The first and second communication passages 128..., 129... are disposed in such a manner that the LPG fuel flows sequentially through the multiple passage chambers 127... in a zigzag from the start point PS to the end point PE of the low-pressure gas passage 93.

Each of the first communication passages 128... communicatively connects corresponding two passage chambers 127, 127 which are adjacent to each other with the passage-longitudinal-direction protruding wall 125 interposed therebetween. Each of the second communication passages 129... communicatively connects corresponding two passage chambers 127, 127 which are adjacent to each other with a corresponding one of the passage-width-direction protruding walls 126 interposed therebetween. The first communication passages 128... and the second communication passages 129... are disposed respectively on sides opposite to each other in a protruding direction of the passage-longitudinal-direction protruding wall 125.

Incidentally, the low-pressure gas passage 93 is formed by the gas passage groove 92 provided in the body 17 and the gas passage cover member 18 covering the gas passage groove 92. The passage-longitudinal-direction protruding wall 125 and a group of the passage-width-direction protruding walls 126... are each provided on either a bottom wall 92a of the gas passage groove 92 or the gas passage cover member 18 in a protruding manner. Furthermore, one of the passage-longitudinal-direction protruding wall 125 and the group of the passage-width-direction protruding walls 126... is provided on one of the bottom wall 92a of the gas passage groove 92 and the gas passage cover member 18 in a protruding manner, and the other one of the passage-longitudinal-direction protruding wall 125 and the group of the passage-width-direction protruding walls 126... is provided on the other one of the bottom wall 92a of the gas passage groove 92 and the gas passage cover member 18 in a protruding manner.

In this embodiment, the passage-longitudinal-direction protruding wall 125 is provided in a protruding manner on the bottom wall 92a of the gas passage groove 92 being one of the bottom wall 92a of the gas passage groove 92 and the gas passage cover member 18, and the passage-width-direction protruding walls 126... formed to straddle the passage-longitudinal-direction protruding wall 125 are provided in a protruding manner on the low-pressure gas passage cover member 1 being the other one of the bottom wall 92a of the gas passage groove 92 and the gas passage cover member 19.

The first communication passages 128... are formed between a tip end of the passage-longitudinal-direction protruding wall 125 and the gas passage cover member 18. Cutouts 130... are provided respectively in tip ends of the passage-width-direction protruding walls 126... to form the second communication passages 129... between the tip ends of the passage-width-direction protruding walls 126... and the bottom wall 92a of the gas passage groove 92. In other words, the passage-longitudinal-direction protruding wall 125 is provided in a protruding manner on the bottom wall 92a of the gas passage groove 92 on a side where the second communication passages 129... are disposed.

Incidentally, the length of each of the passage chambers 127... in the normal flow direction 124 is set to be larger than the width of each of the passage chambers 127... in the width direction of the low-pressure gas passage 93. The heating fluid passage 110 through which the engine cooling water flows is disposed at such a position that the bottom wall 92a is interposed between the heating fluid passage 110 and the low-pressure gas passage 93, the bottom wall 92a being a gas passage wall closer to the second communication passages 129... in the protruding direction of the passage-longitudinal-direction protruding wall 125, among the gas passage cover member 18 and the bottom wall 92a of the gas passage groove 9 which are a pair of gas passage walls facing the low-pressure gas passage 93.

The engine cooling water to be the heat source is introduced into the inside of at least one of the passage-longitudinal-direction protruding wall 125 and the group of the passage-width-direction protruding walls 126.... In this embodiment, a protruding wall provided in the body 17 in a protruding manner, i.e. the passage-longitudinal-direction protruding wall 125 provided on the bottom wall 92a of the gas passage groove 92 in a protruding manner is formed to have a hollow shape opened to the heating fluid passage 110 to introduce the engine cooling water therein.

Moreover, minute gaps 131... are formed between the passage-longitudinal-direction protruding wall 125 and the passage-width-direction protruding walls 126... provided to protrude from the gas passage cover member 18 being a gas passage wall forming one side surface of the low-pressure gas passage 93, and between the passage-width-direction protruding walls 126... and side surfaces of the low-pressure gas passage 93 except for the gas passage cover member 18.

As described above, the passage-longitudinal-direction protruding wall 125 and the passage-width-direction protruding walls 126... protrude into the low-pressure gas passage 93, and thus the multiple passage chambers 127... and the multiple first and second communication passages 128..., 129... communicatively connecting the passage chambers 127... are formed in the low-pressure gas passage 93 by the cooperation of the body 17, the gas passage cover member 18, the passage-longitudinal-direction protruding wall 125, and the passage-width-direction protruding walls 126.... Thus, as shown by open arrows in FIGS. 12 and 13, the LPG fuel flows in the low-pressure gas passage 93 in a zigzag along a three-dimensional flow path formed by a combination of flows in the width direction of the low-pressure gas passage 93 and flows in directions orthogonal to the width direction of the low-pressure gas passage 93.

Incidentally, in the valve mechanism 15, a back pressure chamber 132 facing a back surface of the valve body 29 is formed between the end wall 32 and the valve body 29, in the small diameter tube portion 17b of the body 17. A communication hole 133 for causing the back pressure chamber 132 to communicate with the low-pressure gas passage 93 is provided in the body 17 to penetrate the low-pressure gas passage 93. An outer end opening portion of the communication hole 133 is hermetically closed with a lid member 134. Moreover, the communication hole 133 also penetrates the passage-longitudinal-direction protruding wall 125. Although the passage-longitudinal-direction protruding wall 125 is formed to basically have a hollow shape to introduce the engine cooling water therein, a portion of the passage-longitudinal-direction protruding wall 125 where the communication hole 133 is provided is formed to be solid.

Next, operations of the embodiment are described. The PTC heater unit 41 is attached to the side surface of the body 17 forming part of the valve housing 21 included in the pressure reducing valve for LPG fuel, the PTC heater unit 41 used to heat the LPG fuel flowing through the heated gas passage 59 between the high-pressure gas passage 25 provided in the body 17 and the conduit member 58 guiding the LPG fuel whose pressure is to be reduced. In the PTC heater unit 41, the gap passages 60... forming at least part of the heated gas passage 59 are formed between the inner peripheral surface of the base tube portion 42a having the PTC elements 43 disposed on the outer peripheral surface thereof and the outer peripheral surface of the insertion tube 61 inserted into the base tube portion 42a. The inner peripheral surface of the base tube portion 42a which is an outer-side wall surface of the gap passages 60... is designed to be a heat radiation surface, and all the LPG fuel flowing through the heated gas passage 59 is made to flow near the heat radiation surface. Thus, the heating efficiency of the LPG fuel can be improved.

Moreover, the multiple flat-plate-shaped PTC elements 43 are arranged on the outer peripheral surface of the base tube portion 42a in the polygonal shape in the view seen from the direction of the axis of the base tube portion 42a. Thus, the multiple flat-plate-shaped PTC elements 43 which are low in cost can be arranged to cover the base tube portion 42a, and the heating efficiency of the LPG fuel can be improved.

Furthermore, the multiple ribs 62... are provided on the outer peripheral surface of the insertion tube 61 in a protruding manner with intervals in the peripheral direction, the ribs 62... having tip ends thereof in contact with the inner peripheral surface of the base tube portion 42a. The corresponding one of the gap passages 60... is formed between each two adjacent ribs 62.... Thus, the position of the insertion tube 61 with respect to the base tube portion 42a in the radial direction can be easily determined in such a way that the gap passages 60... are surely formed between the base tube portion 42a and the insertion tube 61.

In addition, the inner peripheral surface of the base tube portion 42a and the outer peripheral surface of the insertion tube 61 are each formed to have such a tapered shape that the diameter thereof becomes smaller toward the one side in the axial direction thereof, and the insertion tube 61 is inserted into the base tube portion 42a from the one end side of the insertion tube 61 in the axial direction. Thus, the insertion of the insertion tube 61 into the base tube portion 42a and the positioning of the insertion tube 61 in the base tube portion 42a are performed easily.

Moreover, the base tube portion 42a forms part of the inner case 42 having the flange portion 42d which is fastened to the body 17, and is directly connected to the body 17 forming the passage portion 63 continuous with the gap passages 60.... Thus, the PTC heater unit 41 can be compactly attached the pressure reducing valve for LPG fuel.

Furthermore, the protruding potions 61a, 61b provided in opposite ends of the insertion tube 61 in the axial direction in a protruding manner are respectively in contact with the inwardly-projecting flange portion 42b provided in the base tube portion 42a and the end wall 40a formed in the body 17 in such a way that the position of the insertion tube 61 in the base tube portion 42a in the axial direction is determined. Thus, positioning of the insertion tube 61 in the axial direction can be easily performed.

Moreover, the insertion tube 61 is formed to have a bottomed cylindrical shape which has the one end in the axial direction opened and the other end in the axial direction closed. The entry conduit part 58a integrally included in the conduit member 58 coaxially attached to the base tube portion 42a has an outer diameter smaller than the inner diameter of the insertion tube 61 and is inserted into the insertion tube 61. The filter 64 is fitted and fixed to the inner end portion of the entry conduit part 58a. Thus, the filter 64 filtering the LPG fuel to be led into the gap passages 60... can be disposed without having the size of the PTC heater unit 41 increased in a direction along the axes of the base tube portion 42a and the insertion tube 61. Moreover, the outer peripheral portion of the filter 64 which is made of metal is pressed into the inner periphery of the inner end portion of the entry conduit part 58a. Thus, the filter 64 can be fitted and fixed to the inner end portion of the entry conduit part 58a with a simple configuration.

Incidentally, the PTC heater unit 41 includes the inner case 42 having the base tube portion 42a, the multiple PTC elements... disposed on the outer peripheral surface of the base tube portion 42a, the current-carrying member 44 having the multiple electrode portions 44a... which are individually and elastically in contact with the multiple PTC elements 43..., and the tubular outer case 45 holding the multiple electrode portions 44a... with the inner peripheral surface thereof, the multiple electrode portions 44a... having the PTC elements 43... interposed between the electrode portions 44a... and the outer peripheral surface of the base tube portion 42a. The current-carrying member 44 is formed of the multiple electrode portions 44a..., the annular convergence portion 44b commonly connecting the multiple electrode portions 44a... together, and the terminal portion 44c having one end connected to the convergence portion 44b. The inner case 42 having the PTC elements 43... disposed on the outer peripheral surface of the base tube portion 42a is fitted to the current-carrying-portion-side assembly 48 in which the one end side of the outer case 45 is covered with the mold portion 47 made of a synthetic resin with the current-carrying member 44 arranged in such a way that the convergence portion 44b commonly continuous with the multiple electrode portions 44a... disposed inside the outer case 45 is disposed on the one end side of the outer case 45 in the axial direction and that part of the terminal portion 44c is positioned outside the outer case 54, the current-carrying-portion-side assembly 48 including at least the current-carrying member 44, the outer case 45, and the mold portion 47.

Accordingly, there is no need for a member for holding the multiple PTC elements 43 and the multiple electrodes individually in contact with the PTC elements 43... during the assembly work. Thus, the number of parts can be reduced, and forming the current-carrying-portion-side assembly 48 in advance can facilitate the assembly work while reducing the number of steps in the assembly work.

Furthermore, the connector portion 47a for disposing part of the terminal portion 44c as a connector terminal 55 is formed integrally with the mold portion 47. Thus, the connector portion 47a can be formed in a highly productive manner.

In addition, the annular sixth sealing member 56 is interposed between an outer peripheral portion of the inner case 42 at the one end thereof and the one end of the current-carrying-portion-side assembly 48, and the annular seventh sealing member 57 is interposed between the outer peripheral portion of the inner case 42 at the other end thereof and the other end of the current-carrying-portion-side assembly 48. Thus, by making the connector portion 47a waterproof, entrance of water or the like from a space between the inner case 42 and the current-carrying-portion-side assembly 48 can be prevented as long as a connector on a power source side is connected to the connector portion 47a.

Moreover, the current-carrying member holding ring 46 with the convergence portion 44b of the current-carrying member 44 interposed between the current-carrying member holding ring 46 and the one end of the outer case 45 is fitted to the one end portion of the outer case 45 in the axial direction, and the mold portion 47 is formed to cover the current-carrying member holding ring 46. Thus, the mold portion 47 can be formed in a state where the current-carrying member holding ring 46 is fitted to the one end portion of the outer case 45 and the current-carrying member 44 is thus held by the outer case 45. Moreover, the current-carrying member holding ring 46 prevents the molten resin from entering the inside of the outer case 45 during the formation of the mold portion 47. Thus, the mold portion 47 can be formed easily.

Furthermore, portions of the outer peripheral surface of the base tube portion 42a where the PTC elements 43... are disposed are formed as the inclined surfaces each inclined in such a way that the surface becomes closer to the center axis of the base tube portion 42a toward the one end of the base tube portion 42a in the axial direction. The base tube portion 42a is fitted to the current-carrying-portion-side assembly 48 from the one end side of the base tube portion 42a in the axial direction. Thus, when the PTC heater unit 41 is to be assembled by fitting the inner case 42 to the current-carrying-portion-side assembly 48, the PTC elements 43... can be easily brought into contact respectively with the electrode portions 44a..., and the assembly work is thereby facilitated.

In addition, the flange portion 42d protruding outward from the base tube portion 42a in the radial direction is provided integrally on the other end side of the metal inner case 42 in the axial direction. The annular PTC holding member 52 made of a synthetic resin is brought into contact with the flange portion 42d from the one end side of the base tube portion 42a in the axial direction, and the end portions of the respective PTC elements 43... on the side close to the flange portion 42d are brought into contact with the PTC holding member 52. Thus, it is possible to position the PTC elements 43... in the axial direction by using the PTC holding member 52 and to block an electrical current by using the PTC holding member 52, which would otherwise flow from the electrode portions 44a... to the flange portion 42d via the PTC elements 43... during power on. Hence, the heat generation efficiencies of the PTC elements 43... are improved.

Moreover, the portion of the outer peripheral surface of the base tube portion 42a where the PTC elements 43 are disposed and the inner periphery of the PTC holding member 52 are formed respectively to have the polygonal shapes corresponding to each other. The multiple protruding portions 52a are provided in the PTC holding member 52 in a protruding manner, disposed at the positions corresponding to the corner portions of the polygonal shape, respectively, and protruding to the side opposite to the flange portion 42d. Each of the protruding portions 52a is disposed between the corresponding two of the multiple PTC elements 43... disposed on the outer peripheral surface of the base tube portion 42a. Thus, the PTC holding member 52 can also have a function of positioning the PTC elements 43... in the peripheral direction of the base tube portion 42a. Hence, increase in the number of parts can be suppressed by having a single part to include multiple functions.

Incidentally, the valve stem 30 of the valve mechanism 15 is connected to the diaphragm rod 68 joined to the center portion of the diaphragm 16. To this end, the insertion recess portion 72 having the end wall 72a facing the valve mechanism 15 at the closed end is coaxially provided in the diaphragm rod 68 to be opened to the valve mechanism 15, the conical-hat member 74 loosely fitted to the insertion recess portion 72 is held between the annular holding plate 75 and the end wall 72a, the conical-member 74 having the outer periphery with a diameter larger than that of one end portion of the valve stem 30 and having the connection recess portion 73 which has a bottom and which is opened to the valve mechanism 15, the annular holding plate 75 fixed to the inner periphery of the open end of the insertion recess portion 72 by being crimped or being press-fitted (being crimped, in this embodiment), and the engaging ring 78 expandable and contractable in a radial direction of the valve stem 30 engages with the annular engaging grooves 76, 77 corresponding to each other and provided respectively in the outer periphery of the one end portion of the valve stem 30 fitted to the connection recess portion 73 and in the inner periphery of the connection recess portion 73. Thus, the conical-hat member 74 can be connected to the diaphragm rod 68 with a simple structure using the diaphragm rod 68, the conical hat-member 74, and the holding plate 75 which are easily processed and manufactured at a low cost, while the inclination of the diaphragm 16 with respect to the surface orthogonal to the valve stem direction and the displacement of the axis of the diaphragm 16 side and the axis of the valve body 29 side are allowed.

Moreover, the holding plate 75 is formed continuously with no end to have the ring shape. Thus, the connection structure of the diaphragm rod 68 and the conical-hat member 74 can be made rigid.

Furthermore, the valve stem 30 is connected the diaphragm rod 68 in the following way. The diaphragm rod 68 with the first retainer 69 which is separate from the diaphragm rod 68 and which is interposed between the diaphragm rod 68 and the center portion of the one surface of the diaphragm 16 is coaxially provided with the shaft portion 68a penetrating the diaphragm 16 and the second retainer 70 which is in contact with the center portion of the other surface of the diaphragm 16, the shaft portion 68a is crimped to engage with the second retainer 70, and thus the diaphragm assembly 71 including at least the diaphragm 16, the first retainer 69, the second retainer 70, and the diaphragm rod 68 is assembled in advance. The one end portion of the valve stem 30 is connected to the diaphragm rod 68 of the diaphragm assembly 71 by using the conical-hat member 74, the holding plate 75, and the engaging ring 78. Thus, the pressure reducing valve can be manufactured in the following way. The diaphragm assemblies 71 are assembled in a large number in advance by crimping, and the one end portion of the valve stem 30 is connected to the diaphragm rod 68 of each diaphragm assembly 71. This facilitates the assembly work of the pressure reducing valve while allowing the inclination of the diaphragm 16 with respect to the surface orthogonal to the valve stem direction and the displacement of the axis of the diaphragm 16 side and the axis of the valve body 29 side.

Moreover, the valve stem 30 is connected to the conical-hat member 74 by using the engaging ring 78 after the conical-hat member 74 is inserted into the insertion recess portion 72 of the diaphragm rod 68 and fixed therein with the holding plate 75. Thus, the connection of the diaphragm rod 68 and the valve stem 30 is facilitated.

Moreover, the diaphragm rod 68 continuous with the valve body 29 is joined to the diaphragm 16 while penetrating the center portion of the diaphragm 16. The adjustment screw 86 is fitted to and supported by the diaphragm rod 68 in the spring chamber 82 to be rotatable about the axis, the adjustment screw 86 having the male screw 84 engraved on the outer peripheral surface and provided with the engaging recess portion 85 in the end surface on the side opposite to the diaphragm rod 68. The male screw 84 in the outer periphery of the adjustment screw 86 is screwed to the inner periphery of the spring receiving member 87 which engages with the inner periphery of the diaphragm cover 22 to be incapable of rotating about the axis coaxial to the rotating axis of the adjustment screw 86 and which is housed in the spring chamber 82 to be moveable in the axial direction. The diaphragm spring 83 being a coil spring is provided in a compressed state between the spring receiving member 87 and the diaphragm cover 22.

Thus, the spring load of the diaphragm spring 83 generating a spring force biasing the diaphragm 16 in such a direction that the capacity of the pressure acting chamber 80 is reduced is adjusted in the following way. The position of the spring receiving member 87 in the axial direction is changed by causing a tool to engage with the engaging recess portion 85 and thereby performing a rotation operation of the adjustment screw 86. Thus, the spring receiving member 87 is moved in the direction along the axis of the adjustment screw 86, and the diaphragm spring 83 is expanded or contracted. To this end, the tool insertion hole 88 is provided in the diaphragm cover 22 at the position facing the end surface of the adjustment screw 86 where the engaging recess portion 85 is provided, and the cap 89 closing the tool insertion hole 88 is attached to the diaphragm cover 22. In other words, the adjustment screw 86 is housed in the spring chamber 82, and the tool insertion hole 88 is closed with the cap 89. Thus, the adjustment screw 87 is not externally visible, and it is thereby less likely that the adjustment screw 87 is undesirably operated by an end user.

Furthermore, in order to heat the LPG fuel flowing through the low-pressure gas passage 93 with the engine cooling water being the heat source, the passage-longitudinal-direction protruding wall 125 and the multiple passage-width-direction protruding walls 126... are provided in the valve housing 21 to protrude into the low-pressure gas passage 93, the passage-longitudinal-direction protruding wall 125 extending in the normal flow direction 124 of the LPG fuel from the start point PS to the end point PE of the low-pressure gas passage 93, the passage-width-direction protruding walls 126... being orthogonal to the normal flow direction 124 and extending in the width direction of the low-pressure gas passage 93. The multiple passage chambers 127... and the multiple first and second communication passages 128..., 129... providing a communication between the adjacent passage chambers 127... in such a way that the LPG fuel sequentially flows through the passage chambers 127... are formed in the low-pressure gas passage 93 by the cooperation of the valve housing 21, the passage-longitudinal-direction protruding wall 125, and the passage-width-direction protruding walls 126.... The first and second communication passages 128..., 129... are disposed in such a manner that the LPG fuel flows sequentially through the multiple passage chambers 127... in zigzag from the start point PS to the end point PE of the low-pressure gas passage 93.

Accordingly, the flow path of the LPG fuel in the low-pressure gas passage 93 is long, and an area in which the LPG fuel is in contact with the valve housing 21, the passage-longitudinal-direction protruding wall 125, and the passage-width-direction protruding walls 126... increase, and the efficiency of heat transmission to the LPG fuel is thereby improved. Moreover, compared to the conventional art using fins, the heat transmission efficiency at the time when the flow rate per unit time is large can be significantly increased.

In addition, the first communication passages 128... each connecting corresponding two passage chambers 127, 127 which are adjacent to each other with the passage-longitudinal-direction protruding wall 125 interposed therebetween and the second communication passages 129... each connecting corresponding two passage chambers 127, 127 which are adjacent to each other with a corresponding one of the passage-width-direction protruding walls 126... interposed therebetween are disposed respectively on sides opposite to each other in the protruding direction of the passage-longitudinal-direction protruding wall 125. Thus, not only the LPG fuel flows in zigzag in the low-pressure gas passage 93, but also flows along a path also curved in a direction orthogonal to the width direction of the low-pressure gas passage 93. In other words, the low-pressure gas passage 93 is configured such that the LPG fuel flows along a three-dimensional flow path formed by a combination of flows in the width direction of the low-pressure gas passage 93 and flows in the direction orthogonal to the width direction of the low-pressure gas passage 93. Thus, the flow path of the LPG fuel is made longer and the area in which the LPG fuel is in contact with the heat transmission surface increases. Hence, the efficiency of heat transmission to the LPG fuel is improved.

Moreover, the length of each of the passage chambers 127... in the normal flow direction 124 is set to be larger than the width of each of the passage chambers 127... in the width direction of the low-pressure gas passage 93. The heating fluid passage 110 through which the engine cooling water flows is disposed in such a way that the bottom wall 92a is disposed between the heat source and the low-pressure gas passage 93, the bottom wall 92a being the one closer to the second communication passages 129 in the protruding direction of the passage-longitudinal-direction protruding wall 125, among the gas passage cover member 18 and the bottom wall 92a of the gas passage groove 92 which face the low-pressure gas passage 93. Thus, the LPG fuel passing through the second communication passages 129... and flowing in the normal flow direction 124 can flow near the outer wall 92a for a longer period, and the heat transmission efficiency is thereby further improved.

The passage-longitudinal-direction protruding wall 125 is provided in the protruding manner on the bottom wall 92a being the gas passage wall closer to the second communication passages 129. Thus, the heat transmission efficiency can be improved by improving the heat transmission from the engine cooling water to the passage-longitudinal-direction protruding wall 125 and thereby allowing further more heat to be transmitted from the passage-longitudinal-direction protruding wall 125 extending in the normal flow direction 124 of the low-pressure gas passage 93 in an elongated manner.

Incidentally, at least part of the valve housing 21 is formed of the body 17 and the gas passage cover member 18 attached to the one surface of the body 17, and the low-pressure gas passage 93 is formed of the gas passage groove 92 provided on the one surface of the body 17 and the gas passage cover member 18 covering the gas passage groove 92. The passage-longitudinal-direction protruding wall 125 and the group of the passage-width-direction protruding walls 126... are each provided on either the bottom wall 92a of the gas passage groove 92 or the gas passage cover member 18 in a protruding manner. Thus, the formation of the passage-longitudinal-direction protruding wall 125 and the passage-width-direction protruding walls 126... is facilitated.

Moreover, one of the passage-longitudinal-direction protruding wall 125 and the group of the passage-width-direction protruding walls 126... is provided on one of the bottom wall 92a of the gas passage groove 92 and the gas passage cover member 18 in a protruding manner, and the other one of the passage-longitudinal-direction protruding wall 125 and the group of the passage-width-direction protruding walls 126... is provided on the other one of the bottom wall 92a of the gas passage groove 92 and the gas passage cover member 18 in a protruding manner. Thus, the passage-longitudinal-direction protruding wall 125 and the group of the passage-width-direction protruding walls 126... are provided separately on the bottom wall 92a of the gas passage groove 92 and the gas passage cover member 18. Hence, the formation of the passage-longitudinal-direction protruding wall 125 and the passage-width-direction protruding walls 126... is further facilitated.

Moreover, the first communication passages 128... are formed between the tip end of the passage-longitudinal-direction protruding wall 125 and the bottom wall 92a of the gas passage groove 92 or the gas passage cover member 18, and the cutouts 130... for forming the second communication passages 129... between the tip ends of the passage-width-direction protruding walls 126... and the bottom wall 92a of the gas passage groove 92 or the gas passage cover member 18 are provided respectively in the tip ends of the passage-width-direction protruding walls 126.... Thus, the formation of the first communication passages 128... and the second communication passages 129... is facilitated.

Moreover, the heating fluid passage groove 111 is provided in the other surface of the body 17 which is on the side opposite to the low-pressure gas passage 93. The heating fluid passage cover member 19 for forming the heating fluid passage 110 between the heating fluid passage cover member 19 and the heating fluid passage groove 111 covers the heating fluid passage groove 111 and is attached to the other surface of the body 17, the heating fluid passage 110 used to flow the engine cooling water therethrough. Thus, the heating fluid passage 110 can be formed easily. In addition, the heating fluid passage 110 can be disposed near the low-pressure gas passage 93. Thus, it is possible to improve the heat transmission efficiency and configure a compact heating device.

The engine cooling water is led into at least one of the passage-longitudinal-direction protruding wall 125 and the group of the passage-width-direction protruding walls 126.... Thus, the heat transmission efficiency can be further improved by effectively heating at least one of the passage-longitudinal-direction protruding wall 125 and the group of the passage-width-direction protruding walls 126... with the engine cooling water, and thereby causing at least one of the passage-longitudinal-direction protruding wall 125 and the group of the passage-width-direction protruding walls 126... to effectively function as a surface transmitting heat to the LPG fuel.

In addition, the engine cooling water is led into a protruding wall provided in the body 17 in a protruding manner among the passage-longitudinal-direction protruding wall 125 and the passage-width-direction protruding walls 126..., in this embodiment, the passage-longitudinal-direction protruding wall 125 provided on the bottom wall 92a of the gas passage groove 92 in a protruding manner. Thus, a structure for leading the engine cooling water into the passage-longitudinal-direction protruding wall 125 can be made simple.

Incidentally, the LPG fuel is likely to stagnate on a side of a wall surface of each of the passage-width-direction protruding walls 126... which faces downstream in the normal flow direction 124. To this end, the minute gaps 131... are formed between the passage-longitudinal-direction protruding wall 125 and the passage-width-direction protruding walls 126 provided in a protruding manner from the gas passage cover member 18 being the gas passage wall forming the one side surface of the low-pressure gas passage 93, and between the passage-width-direction protruding walls 126 and the other gas passage walls of the low-pressure gas passage 93. Thus, a small amount of the LPG fuel flows through the minute gaps 131... as shown by arrows drawn in thin lines in FIGS. 12 and 13, and the stagnation is made less likely to occur. Hence, the wall surface of each of the passage-width-direction protruding walls 126... which faces downstream in the normal flow direction 124 is effectively used as the heat transmission surface. This contributes to improvement in heat transmission efficiency.

Moreover, a pressure reducing valve for LPG fuel having excellent heat transmission efficiency can be obtained by applying a heating structure using the engine cooling water as described above to a pressure reducing valve having the low-pressure gas passage 93 through which the LPG fuel with reduced pressure flows. In addition, the body 17 housing the valve mechanism 15 is configured to be part of the valve housing 21 being a passage formation body forming the low-pressure gas passage 93. Thus, the pressure reducing valve for LPG fuel to which the heating device is attached can be compactly configured.

An embodiment of the present invention has been described above. However, the present invention is not limited the embodiment described above, and various design changes can be made without departing from the gist of the present invention.

## Claims

1. A PTC heater unit configured to heat gas flowing through an inside of a heating gas passage (59) with a PTC element (43), wherein a gap passage (60) forming at least part of the heating gas passage (59) is formed between an inner peripheral surface of a base tube portion (42a) and an outer peripheral surface of an insertion tube (61) inserted in the base tube portion (42a), the base tube portion (42a) having the PTC element (43) disposed on an outer peripheral surface thereof.

2. The PTC heater unit according to claim 1, wherein a plurality of the PTC elements (43) each having a flat-plate shape are arranged on the outer peripheral surface of the base tube portion (42a) in a polygonal shape in a view seen from a direction along an axis of the base tube portion (42a).

3. The PTC heater unit according to claim 1 or 2, wherein
a plurality of ribs (62) are provided in a protruding manner with intervals in a peripheral direction on one of the inner peripheral surface of the base tube portion (42a) and the outer peripheral surface of the insertion tube (61), the ribs (62) having respective tip ends thereof in contact with the other of the inner peripheral surface of the base tube portion (42a) and the outer peripheral surface of the insertion tube (61), and
the gap passage (60) is formed between each adjacent ones of the ribs (62).

4. The PTC heater unit according to claim 3, wherein
the inner peripheral surface of the base tube portion (42a) and the outer peripheral surface of the insertion tube (61) are each formed of a tapered shape with a diameter becoming smaller toward one side in an axial direction thereof,
and
the insertion tube (61) is inserted from an end thereof on the one side in the axial direction into the base tube portion (42a).

5. The PTC heater unit according to any one of claims 1 to 4,
wherein
the base tube portion (42a) is detachably and attachably connected to a passage formation member (17) forming a passage (52) continuous with the gap passage (60), and
protruding portions (61a, 61b) provided in a protruding manner respectively on opposite ends of the insertion tube (61) in the axial direction are in contact respectively with an inwardly-projecting flange portion (42b) and an end wall (40a) in such a way that a position of the insertion tube (61) in the base tube portion (42a) in the axial direction is determined, the inwardly-projecting flange portion (42b) provided in the base tube portion (42a) to face one end of the insertion tube (61) in the axial direction, the end wall (40a) formed in the passage formation member (17) to face another end of the insertion tube (61) in the axial direction.

6. The PTC heater unit according to any one of claims 1 to 5,
wherein
the insertion tube (61) is formed in such a bottomed cylindrical shape that one end thereof in the axial direction is opened and another end thereof in the axial direction is closed,
an entry conduit part (58a) integrally included in a conduit member (58) attached coaxially to the base tube portion (42a) has an outer diameter smaller than an inner diameter of the insertion tube (61) and is inserted in the insertion tube (61), and
a filter (64) is fitted and fixed to an inner end portion of the entry conduit part (58a).

7. The PTC heater unit according to claim 6, wherein an outer peripheral portion of the filter (64) made of a metal is press-fitted to an inner periphery of the inner end portion of the entry conduit part (58a).

8. A pressure reducing valve for LPG fuel, wherein the base tube portion (42a) of the PTC heater unit (41) according to any one of claims 1 to 7 is directly connected to a body (17) incorporating a valve mechanism (15) in such a way that a downstream side of the gap passage (60) communicates with a high-pressure gas passage (25) provided in the body (17).
